Europäisches Patentamt

European Patent Office

Office européen des brevets

(19)

(11) **EP 1 248 459 A2**

(12) **EUROPEAN PATENT APPLICATION**

(43) Date of publication:
**09.10.2002 Bulletin 2002/41**

(51) Int Cl.[7]: **H04N 5/445**

(21) Application number: **02252380.7**

(22) Date of filing: **02.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **03.04.2001 JP 2001104755**

(71) Applicant: **CANON KABUSHIKI KAISHA Tokyo (JP)**

(72) Inventors:
• **Saito, Akio**
  **Ohta-ku, Tokyo (JP)**
• **Mizutome, Atsushi**
  **Ohta-ku, Tokyo (JP)**

(74) Representative:
**Beresford, Keith Denis Lewis et al**
**Beresford & Co.,**
**2-5 Warwick Court,**
**High Holborn**
**London WC1R 5DJ (GB)**

(54) **Display control apparatus and method, receiving apparatus and recording medium**

(57)    It is an object of the present invention to provide a display picture screen, which is comfortable for a user. A display control apparatus of the present invention comprises an inputting unit for inputting a television broadcast signal including a plurality of broadcast programs received by a receiving unit, and a display control unit for controlling a video image corresponding to the television broadcast signal so as to be displayed on a display unit and controlling a display operation of the display unit in response to a new display request of information during the display of the video image, in which the display controlling unit determines a priority (level) between the broadcast program and the new display information based on attribute information of a broadcast program being displayed in the display unit, and controls a display operation of the display unit based on the priority.

FIG. 1A

**EP 1 248 459 A2**

(Cont. next page)

# FIG. 1B

100

MEMORY UNIT — 14

MEMORY CONTROL UNIT — 13

16

DTV | PC
DVD | OSD

FROM FIG. 1A

MOVING IMAGE INPUT UNIT
8a — S1-a

RESOLUTION CONVERSION UNIT
9a — S2-a

OUTPUT CONVERSION UNIT — 15

22

MOVING IMAGE INPUT UNIT
8b — S1-b

RESOLUTION CONVERSION UNIT
9b — S2-b

OUTPUT SYNTHESIZATION UNIT — 18

MOVING IMAGE INPUT UNIT
8c — S1-c

RESOLUTION CONVERSION UNIT
9c — S2-c

S3

GRAPHIC ACCELERATOR — 21

BUS ARBITRATION UNIT — 12

**Description**

BACKGROUND OF THE INVENTION

Field of the Invention

The present invention relates to a display control apparatus and method, a receiving apparatus and a recording medium and, in particular, to display control of a plurality of information.

Related Background Art

In recent years, as display apparatus with a high resolution are widespread by the use of large displays and Hi-Vision broadcast, there is an increasing demand for displaying several video images on one display screen (multiwindow) even in a television receiver. However, conventionally, if such a multiwindow is displayed, a viewer designates desired video images to be displayed on respective windows. For example, in the case of two picture display, a user first sets the two picture display to be performed. Then, when the two picture display is performed, if displayed video images are different from desired video images, the user changes the video images to the desired video images. In this way, the user sets video images on the respective windows to view them.

As mentioned above, there is no specific problem if a user selects and views broadcast video images. However, in recent years, it is envisaged that functions of electronic mail and schedule management are given to a television receiver of this type. In an apparatus of this type, convenience of a multiwindow largely depends on at which timing and how a video image being viewed now is switched over to the multiwindow when a multiwindow display request is issued through receiving of an electronic mail during viewing of a television broadcast.

For example, when a movie program is being viewed, if the video image in a climax scene is suddenly switched over to a multiwindow and an electronic mail window is displayed, expression of the climax scene is ruined.

Such the situation in control of the multiwindow is not specifically considered in the conventional television receiver, and the control of the multiwindow is not comfortable for a user.

SUMMARY OF THE INVENTION

The present invention has been devised in view of solving the above-mentioned drawbacks under such circumstances, and it is an object of the present invention to provide a picture display which is comfortable for a user.

In the above object, according to an aspect of the present invention, there is provided a display control apparatus including: inputting means for inputting a television broadcast signal including a plurality of broadcast programs received by reception means; and display controlling means for controlling a video image corresponding to the television broadcast signal so as to be displayed on a display unit and controlling a display operation of the display unit in response to a new display request of information during the display of the video image, wherein the display controlling means determines a priority (level) between the broadcast program and the new display information based on attribute information of a broadcast program being displayed on the display unit, and controls a display operation of the display unit based on the priority.

Other objects and features of the present invention will be apparent from the following descriptions of embodiments of the present invention taken in conjunction with the accompanying drawings, in which same reference symbols designate the same or similar parts throughout the figures thereof.

BRIEF DESCRIPTION OF THE DRAWINGS

In the accompanying drawings:

Fig. 1 is comprised of Fig. 1A and Fig. 1B showing block diagrams of a configuration of a television reception system to which the present invention is applied;
Fig. 2 is a flow chart for describing a display control operation by the system of Figs. 1A and 1B;
Fig. 3 shows a type priority table to be used in the system of Figs. 1A and 1B;
Fig. 4 shows a source priority table to be used in the system of Figs. 1A and 1B;
Fig. 5 shows a time-depending viewed video image priority table to be used in the system of Figs. 1A and 1B;
Fig. 6 shows a display method table to be used in the system of Figs. 1A and 1B;
Fig. 7 is a flow chart for describing a display control operation by the system of Figs. 1A and 1B;
Fig. 8 shows a display size table to be used in the system of Figs. 1A and 1B;
Fig. 9 shows a state of a picture screen displayed by the system of Figs. 1A and 1B;
Fig. 10 is a flow chart for describing a display control operation by the system of Figs. 1A and 1B;
Fig. 11 shows a state of a remote controller in the system of Figs. 1A and 1B;
Fig. 12 shows a state of an another picture screen displayed by the system of Figs. 1A and 1B;
Fig. 13 shows a state of yet another picture screen displayed by the system of Figs. 1A and 1B;
Fig. 14 shows a main menu picture screen displayed by the system of Figs. 1A and 1B;
Fig. 15 shows a schedule setting screen; and
Fig. 16 shows a screen for setting a window display format.

## DESCRIPTION OF THE PREFERRED EMBODIMENTS

Embodiments of the present invention will be hereinafter described in detail with reference to the accompanying drawings.

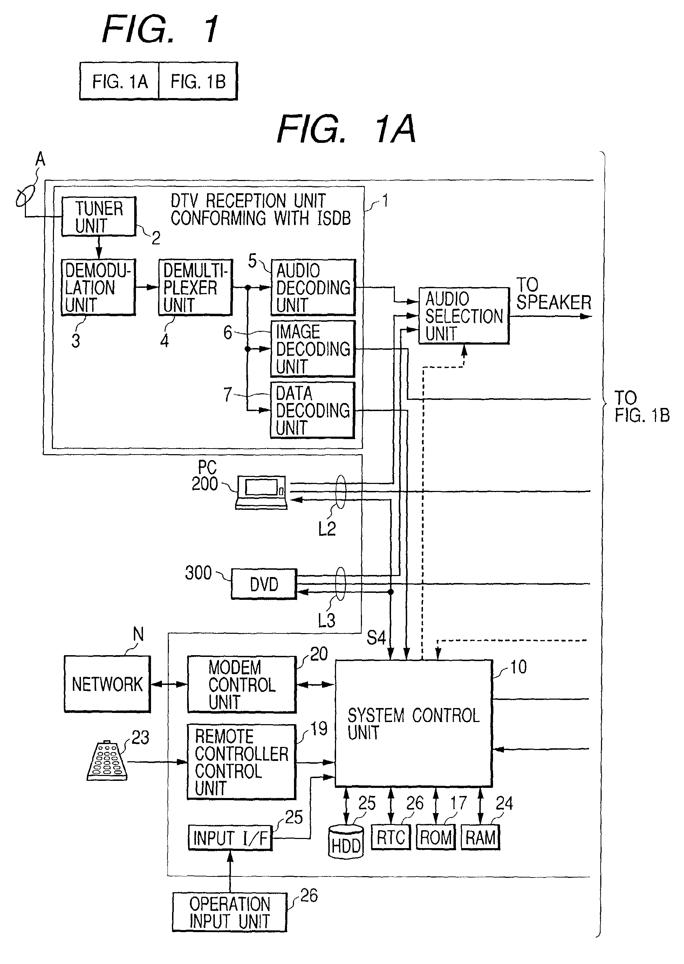

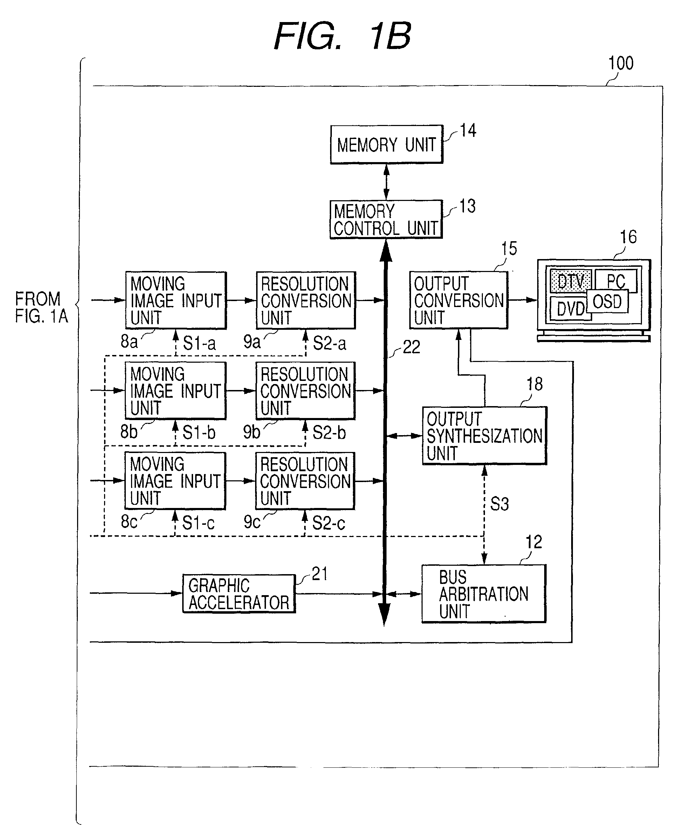

Figs. 1A and 1B show a configuration of a television broadcast reception system that is a first embodiment of the present invention.

In the system of Figs. 1A and 1B, three independent image sources are displayed on one monitor and an input device of each image source such as a mouse, a keyboard and a remote controller can be controlled in association with image data displayed on the monitor. Moreover, the most suitable mapping display of each of the three image sources can be realized in a desired area of the monitor.

The number of these image sources may be more than three or less than three.

In Figs. 1A and 1B, reference numeral 1 denotes a DTV reception unit conforming with ISDB. Here, an ISDB will be briefly described.

Accompanying with the development of the digital technology, also in the field of broadcasting, the Integrated Services Digital Broadcasting (ISDB) system of the interactive format has been studied and developed, in which various kinds of information including broadcast signals are digitized.

More specifically, this ISDB system is a broadcasting system in which not only current broadcast signals (standard television signals, Hi-Vision signals) but also data of software, facsimile and the like and even multimedia information such as voices, characters, figures and images are digitized (encoded), respectively, and integrated to be multiplexed and thereby subjected to modulation processing conforming with a transmission format to be transmitted.

When the various kinds of information including broadcast signals are integrated to be multiplexed, the information can be simultaneously integrated to be multiplexed and transmitted with additional information that is used as control information on a receiving side. The integrated broadcast signals for ISDB (digital signals) are transmitted utilizing ground waves, satellite waves, optical cables and the like. On a reception terminal side, the integrated broadcast signals for ISDB are received and a target signal is discriminated. As a result, a user of the receiving terminal can not only cause a monitor to display the target signal and enjoy it as a usual television broadcast, but also record (store) the signal using recording means or transfer it to other terminals. Moreover, if the received additional information is utilized, received information can be utilized according to preference of the user such as monitoring control, recording control and even process control with respect to a monitored image. That is, an interactive broadcasting system can be established.

Next, a configuration block inside the DTV reception unit 1 will be described. Reference numeral 2 denotes a tuner unit, which receives integrated broadcast signals for ISDB (digital signals) from ground waves and satellite waves via an antenna A, causes them to pass a band-pass filter, a down-converter and the like and, then, outputs them to a demodulation unit 3. The demodulation unit 3 applies demodulation processing conforming with a transmission format as well as error correction processing and the like to the integrated broadcast signals for ISDB and outputs a desired MPEG2 transport stream to a demultiplexer unit 4. The demultiplexer unit 4 separates MPEG2 video data, MPEG2 audio data and additional information of a desired program from this MPEG2 transport stream.

The separated MPEG2 audio data is decoded by an audio decoding unit 5 and outputted as an audio signal. If an amplifier and a speaker are connected to the audio decoding unit 5, a user can listen to voices of a received program. In addition, the separated MPEG2 video data is decoded by an image decoding unit 6, converted into a display format of a raster scan format and, then, outputted as a broadcast image to a moving image input unit 8a in a later stage. Moreover, the separated MPEG2 additional information is decoded by a data decoding unit 7 and outputted to a multi-screen control unit 10.

Decoding in this context means obtaining a scenario of a multimedia information service provider from an object written in a scenario description language such as MHEG-5, HTML and BML. This scenario consists of attributes (a size and position, an encoding method) of structured contents. The multi-screen control unit 10 interprets the scenario and, in association with a graphic accelerator 21 and the image decoding unit 6, constitutes an ISDB data broadcast image.

Reference numeral 200 denotes a computer (PC) such as a personal computer and a workstation. A moving image signal outputted from a PC 1b is outputted to a moving image input unit 8b in an RGB raster format of an analog signal or a digital signal. Reference numeral 300 denotes a DVD player, which outputs a moving image signal reproduced from a DVD video disk to a moving image input unit 8c in a YUV raster format of an analog signal or a digital signal. In addition, the PC 200 and the DVD player 300 are connected to a receiver 100 by lines L2 and L3, respectively.

Reference symbols 8a, 8b and 8c denote moving image input units for receiving image data outputted from the reception unit 1, the PC 200 and the DVD 300, respectively. The input unit 8b has an A/D converter, a PLL (Phase Locked Loop) for sampling image data, a digital signal decoder such as an LVDS (Low Voltage Differential Signaling), a differential buffer, and the like. In addition, the input units 8a and 8c have a color conversion circuit for converting composite signals, which are sent from the reception unit 1 and the DVD 300, from YUV to RGB signals, an IP conversion circuit for converting a scanning method from interlace to progressive, and the like.

Simultaneously with the reception of the image data, each of the moving image input units 8a, 8b and 8c also receives, from each image source, image data and a control signal for receiving image data, for example, a horizontal synchronizing signal for synchronizing with one line, a vertical synchronizing signal for synchronizing with one frame or one field, a clock signal for sampling one pixel and a display enable signal for indicating a transfer period of effective image data.

Each of the moving image input units 8a, 8b and 8c receives the image data from the image source at independent timing. Reference symbols 9a, 9b and 9c denote resolution conversion units for converting a display format (the number of display lines, the number of dots and the number of colors) of image data received in each moving image input unit in accordance with the control of the system control unit 10. The resolution conversion units 9a, 9b and 9c of this embodiment also have a function of a bus interface for inputting independent three image data in one common graphic bus 22. Image data outputted from each of the resolution conversion units 9a, 9b and 9c is passed through a graphic bus 22 and stored under the control of a memory control unit 13 in a memory unit 14 having a capacity which equals to at least one picture of displayed image, or a capacity which equals to four pictures of displayed images in this embodiment.

Simultaneously with this, the output synthesization unit 18 issues a stored memory address of an input image to be displayed to the memory control unit 13 based on a multiwindow management instruction from the system control unit 13, thereby reading out display data from the memory unit 14 and realizing final multi-screen synthesization.

An output conversion unit 15 synchronizes with a frame rate of a display device 16 to perform the control of display drive and the display format conversion according to characteristics of the display device 16. The display device 16 may be a flat panel (liquid crystal, plasma and the like) having a matrix electrode structure or a CRT as long as it is a device for displaying an image.

In this embodiment, if the display device 16 is a television, it is intended to be a Hi-Vision television or, if it is a PC, it is intended to be a large screen display capable of displaying a high-definition image of SXGA or higher.

Accesses to the memory asynchronously occurring with respect to the graphic bus 22 are scalably managed by a bus arbitration unit 12 based on priorities. Reference numeral 10 denotes a system control unit for controlling the entire system. The system control unit 10 contains a CPU having an arithmetic operation ability and performs a control operation utilizing an RAM 24 for temporarily storing data, an ROM 17 for storing a control program, an RTC (Real Time Clock) 25 for measuring time and an HDD (Hard Disk Drive) 26 for recording an application program or video image data.

In addition, the system control unit 10 may be constituted only by a logic, or may be a CPU or a media processor capable of parallel arithmetic operation. The program to be controlled may be contained in the ROM 17 or may be transferred from the outside via a peripheral input/output interface. In addition, a character font and the like are stored in the ROM 17 as needed, and are used for developing character information of a WWW or a data broadcast on a screen.

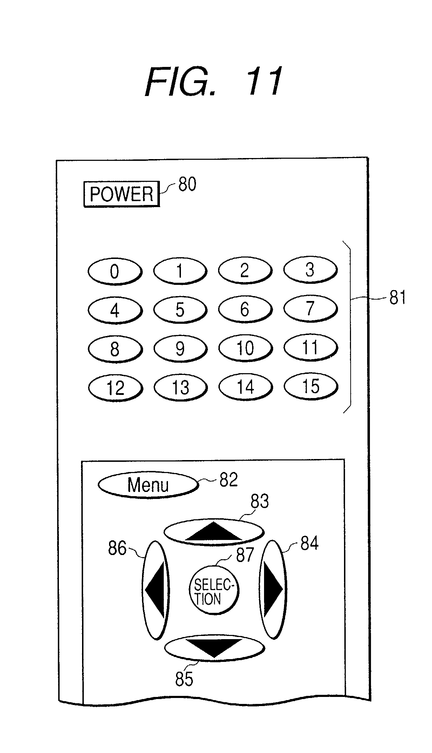

Further, a modem control unit 20 and a remote controller control unit 19 are connected to the system control unit 10. The system control unit 10 can make a connection to the Internet N via the modem control unit 20 and can receive a command of a remote controller 23 using infrared rays via the remote controller control unit 19. A state of the remote controller 23 is shown in Fig. 11. In Fig. 11, reference numeral 80 denotes a power key, 81 denotes a ten key, 82 denotes a menu key, 83 to 87 denote direction keys, respectively, and 87 denotes a selection key.

Referring to Figs. 1A and 1B again, reference numeral 21 denotes a graphic accelerator, which is used when the system control unit 10 uses a drawing instruction and an acceleration function such as BitBlt and DMA in generating an OSD (On Screen Display) screen, an EPG (Electronic Program Guide) screen, an ISDB screen and the like on the display 16.

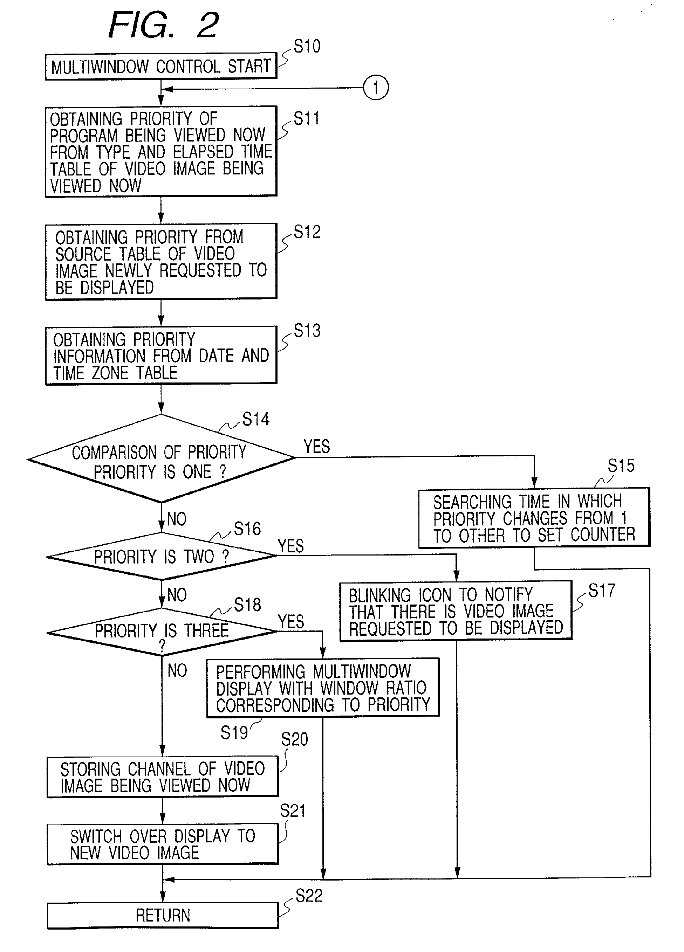

Next, an example of a case in which an electronic mail is received during viewing of a TV broadcast will be described with reference to a flow chart of Fig. 2.

Fig. 2 is a flow chart showing an operation for following a subroutine program in the case in which an interrupt instruction of a multiwindow is issued during execution of a main program of the system control unit 10.

Here, for example, it is assumed that a movie program of a two-hour film from 21:00 to 23:00 is viewed at 22:30 on Saturday and a sports program starts at 23:00. An electronic mail is inputted to the system control unit 10 through the modem control unit 20 from the Internet. When the electronic mail is received, interruption occurs. A main program stored in the HDD 25 has already been started and, when the interruption occurs, the operation jumps to Step S10.

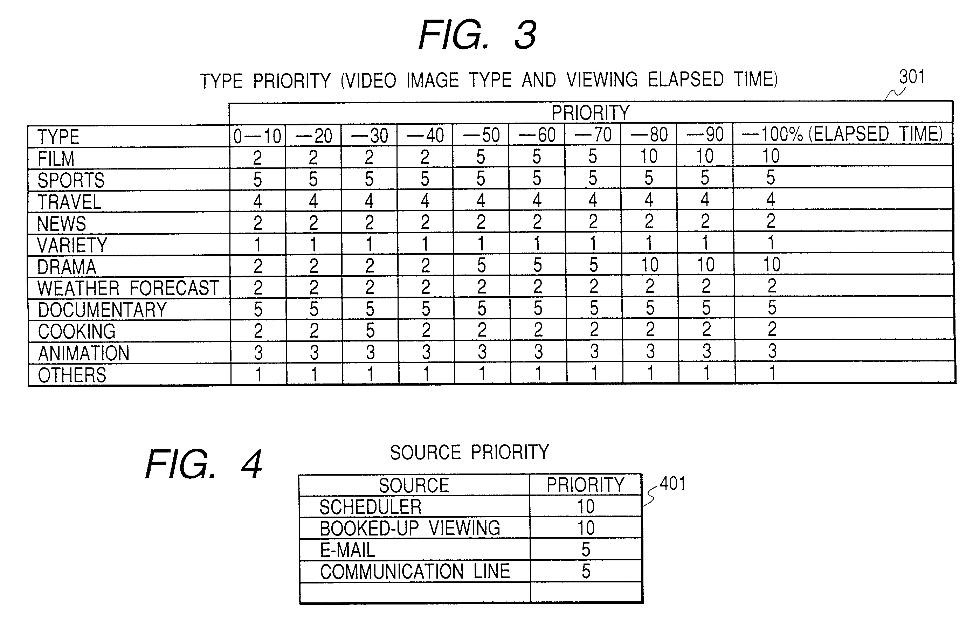

In Step S11, a type of a program being viewed now is detected based on EGP information from the data decoding unit 7 and a type priority (type and viewing elapsed time) table of Fig. 3 is further referred to, whereby a priority of the program being viewed now is obtained in accordance with the detected type. Here, since 75% of the viewing time of the movie program has elapsed, the priority "10" is read. A table 301 in Fig. 3 is a table in which priority information for each accumulated viewing elapsed time of a program (how many percentages of a program of how many hours has continued to be viewed) for each type of a program (type information of a program included in the EPG information). The table 301 is stored in the RAM 24. In addition, the EPG information is information indicating contents of each program that is being broadcast on the television. The EPG information includes, for example, information on a broadcasting time, a type of a program and performers.

In Step S12, by referring to a source priority table 401 shown in Fig. 4, a priority of information requested to be displayed is read out. Here, since a source is an electronic mail, the priority is "5". Reference numeral 401 denotes a table for indicating a priority of a source of the information requested to be displayed, which is stored in the RAM 24.

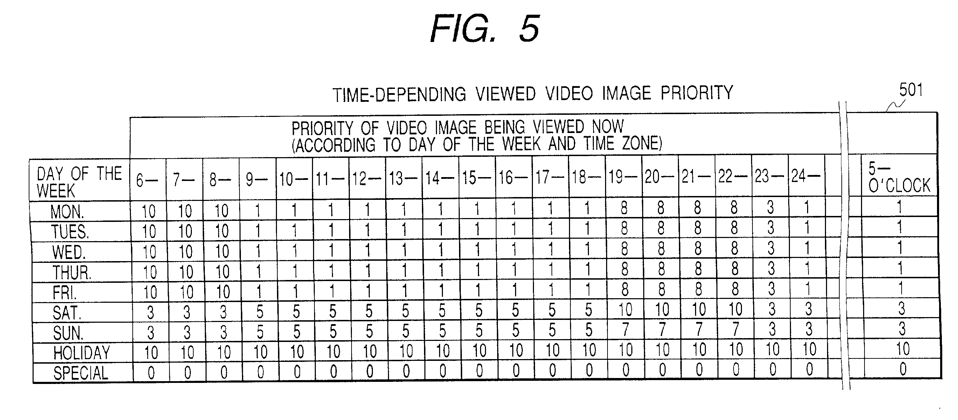

In Step S13, by referring to a time-depending viewed video image priority table 501 shown in Fig. 5, a priority of a current date and time is obtained. Here, since the date and time is 22:30 on Saturday, the priority "10" is read out. Fig. 5 is a table in which time is divided into time zones for each day of the week and priority information of a video image being viewed now is written for each time zone. The table is stored in the RAM 24.

In Step S14, given that a sum of the type priority and the time-depending viewed video image priority of the program being viewed now is made to be a priority of the program being viewed now, a source priority of information newly requested to be displayed is deducted from this priority to obtain a priority difference.

Here,

Priority difference = (Type priority + Time-depending

viewed video image priority) - Source priority

Priority difference = (10 + 10) - 5 = 15

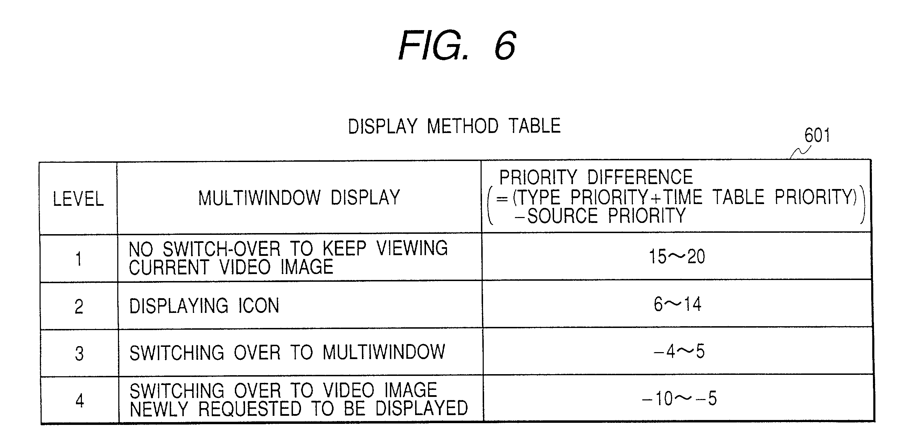

Then, by referring to a display method table 601 of Fig. 6 based on this priority difference, a priority level is obtained. Here, since the priority difference is 15 and a priority level is 1 as shown in Fig. 6, the operation branches to Step S15 without switching the video image being viewed now. Fig. 6 is a table for indicating correspondence between priority differences and display priority levels, which is stored in the RAM 24.

In Step S15, a level at which the priority level changes from 1, that is, time when the priority difference becomes less than 14 is obtained based on the EPG information from the type priority table 301, the time-depending viewed video image priority table 501 and the data decoding unit 7. That is, a type of a program starting after the program being viewed now is obtained from the EPG information. Then, priority information of the type is detected from the table 301 in an order from a program with an earlier starting time. Then, a starting time of a program is obtained, for which a value found by deducting a source priority of information newly requested to be displayed from a sum of a type priority and a time-depending viewed video image priority at the time when the program starts is 14 or less.

Here, since a sports program starts at 23:00 and, thus, a type priority is a sports type and a viewing elapsed time is 0 - 10% according to the table 301, the type priority "5" is obtained.

In addition, since the time-depending viewed video image priority is 23:00 on Saturday, the priority "3" is obtained from the table 501.

Thus, when the sports program starts at 23:00, since a priority difference = (5 + 3) - 5 = 3, it is understood that a priority level of the next program is 3 from the table 601.

Then, 30 minutes that is found by deducting the current time 22:30 from 23:00 is set in an internal counter and the operation returns to the main program. Here, if a priority level of the program starting from 23:00 is 1 as well, a priority level of the next program is further obtained in the same manner.

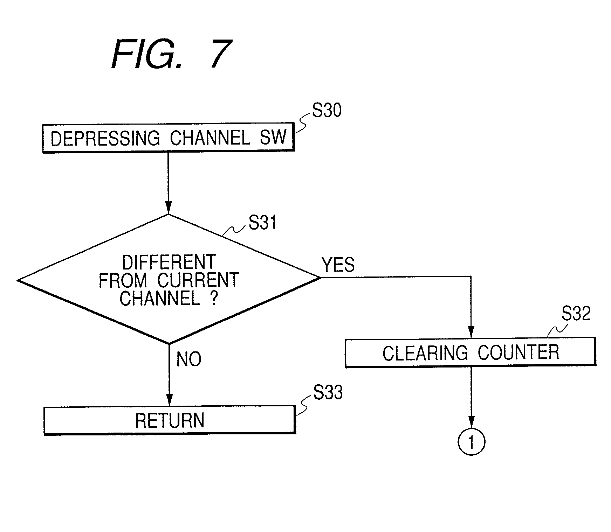

If a channel is changed before 23:00, the operation jumps to Step S30 of a flow chart of Fig. 7. If the channel is different from a channel being viewed now in Step S31, a set counter is cleared in Step S32, and the operation returns to the main program.

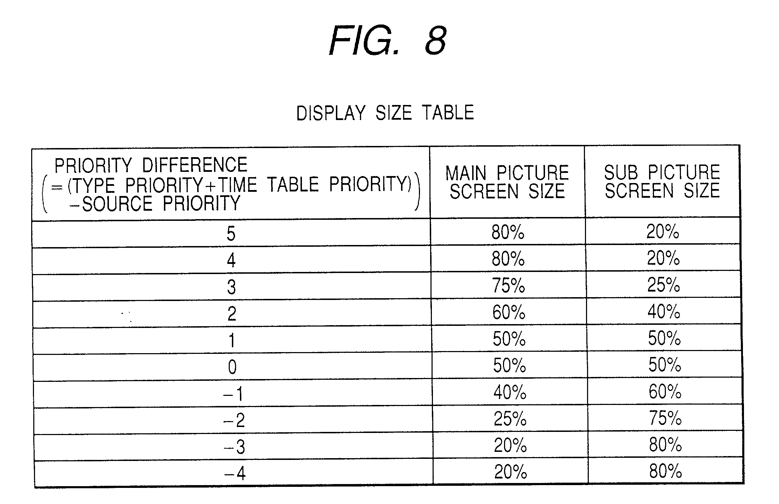

If the program continues to be viewed without changing the channel and a counter is up at 23:00, interruption occurs and the operation jumps to Step S10. As described above, the operation proceeds to Steps S11, S12 and S13, and, in Step S14, since the priority level 3 is obtained, the operation proceeds to Step S18. Further, in Step S19, a sports program and a mail window are displayed on a multiwindow. A display area ratio in this case is determined based on the above-mentioned priority difference. That is, Fig. 8 is a table indicating display sizes at the time of the multiwindow display, where, since the priority difference is "3", a main picture screen size is set at 75% and a sub picture screen size is set at 25%. Here, a main picture screen means a picture screen for displaying a video image that has been viewed so far and a sub picture screen means a picture screen on which information newly requested to be displayed is displayed. Thus, vertical and horizontal sizes of a video image being viewed now are reduced to 75% with respect to display size of the display device 16, respectively, and an electronic mail is displayed in a display area that is 25% of the display size of the display device 16 both vertically and horizontally. A table 801 of Fig. 8 is also stored in the RAM 24.

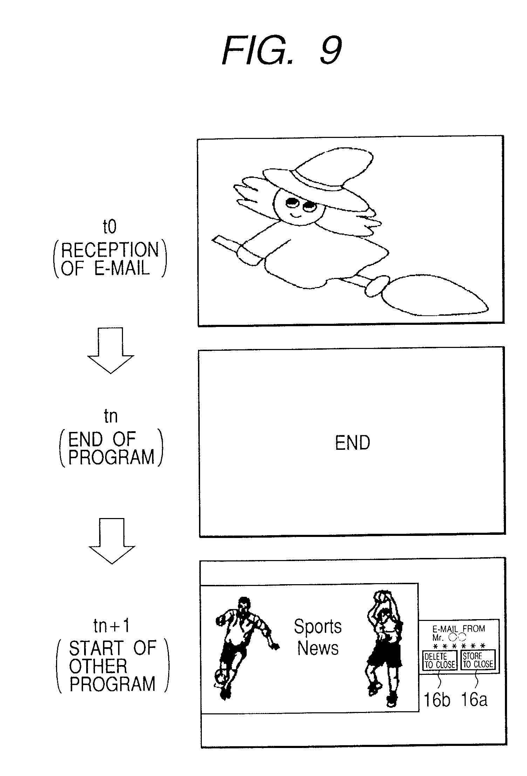

Fig. 9 shows a display picture screen of the display device 16 in the above-mentioned embodiment in time series. In Fig. 9, although an electronic mail is received at t0, since a priority level is 1, only a program video image being viewed continues to be displayed and a starting time of a program in which the priority level changes to a level other than 1 is calculated to set an internal counter. When the program being viewed ends at tn, the next program is started at tn + 1 and a priority difference with the next program is calculated by interruption from the internal counter to find that the priority level is 3, the display picture screen of the program being viewed now is reduced and displayed on a multiwindow together with a picture screen of the electronic mail. In this example, since the priority difference is "3", the video image of the program being viewed now and information of electronic mail are displayed in areas in which both the vertical and horizontal sizes thereof are 75% and 25% of the display device 16, respectively.

If a message of the electronic mail is too long to be displayed in the area of 25%, the message of the electronic mail is adjusted to be scrolled upward by pressing a direction key 85 of the remote controller 23. If the message of the electronic mail is scrolled too much, it can be moved back by pressing a direction key 83. In addition, as shown in Fig. 9, an end button 16a of the electronic mail picture screen is displayed as "store to close". Then, it is possible to store an electronic mail being displayed and then close the electronic mail window. An end button 16b of the electronic mail picture screen is displayed as "delete to close". This is a button for deleting the electronic mail being displayed and then closing the electronic mail window.

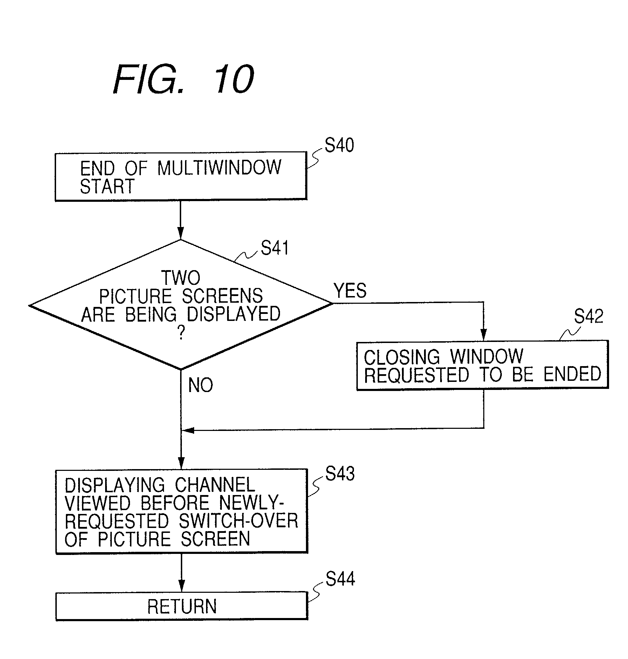

These buttons 16a and 16b are selected by the direction keys 84 and 86 of the remote controller 23 to operate the selection key 87, whereby the electronic mail window can be closed. If the end button 16a is selected, the electronic mail is stored. If the end button 16b is selected, the electronic mail is deleted, and the operation jumps to Step S40 of a flow chart of Fig. 10. In Step S41, it is determined whether or not multiple picture screen is being displayed. If the multiple picture screen is being displayed, the electronic mail window requested to end is closed in Step S42 and a window that was displayed before switch-over of a picture screen due to a new display request is displayed on a full picture screen, that is, on the entire picture screen of the display device 16. Then, the operation returns to the main program.

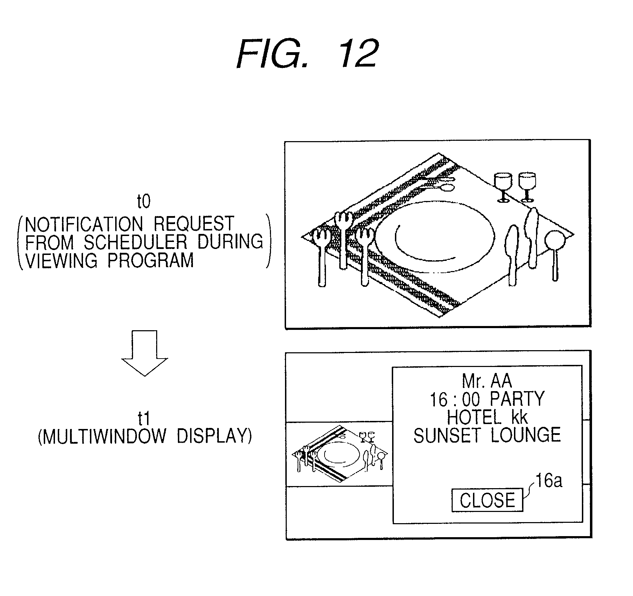

Fig. 12 shows a state of the display picture screen of the display device 16 in the case in which a new display request is received from a scheduler when a cooking program from 14:30 to 15:00 is viewed at 14: 50 on Saturday.

As discussed below, the scheduler is set to notify a user of an event starting from 16:00, 70 minutes before the event.

When a new display request of a video image is generated from the scheduler during viewing of a cooking program at t0, since 75% of the cooking program has been viewed, the type priority "2" is obtained from the type priority table 301 of Fig. 3. Since it is 14: 30 on Saturday, the time-depending viewed video image priority "5" is obtained from the table 501 of Fig. 5. In addition, the source priority "10" is obtained from the table 401 of Fig. 4. Thus, priority difference = (type priority + time-depending viewed video image priority) - video image source priority, that is, priority difference = 2 + 5 - 10 = -3.

Since the priority difference is -3, "switching over to multiwindow" of the priority level 3 is selected from the table 601 of Fig. 6. In addition, it is determined that the main picture screen size is 20% and the sub picture screen size is 80% in the multiwindow display according to the display size table 801 of Fig. 8.

Thus, the vertical and horizontal sizes of the video image of the program being viewed now are reduced to 20% at t1 respectively, and a notification video image from the scheduler is displayed using the area of 80% of the picture screen both vertically and horizontally.

Further, a button 16c for closing a picture screen from the scheduler is provided on a notification picture screen. The notification picture screen from the scheduler is ended by pressing the selection key 87 of the remote controller 23 to display the cooking program, which has been viewed so far, on a full picture screen.

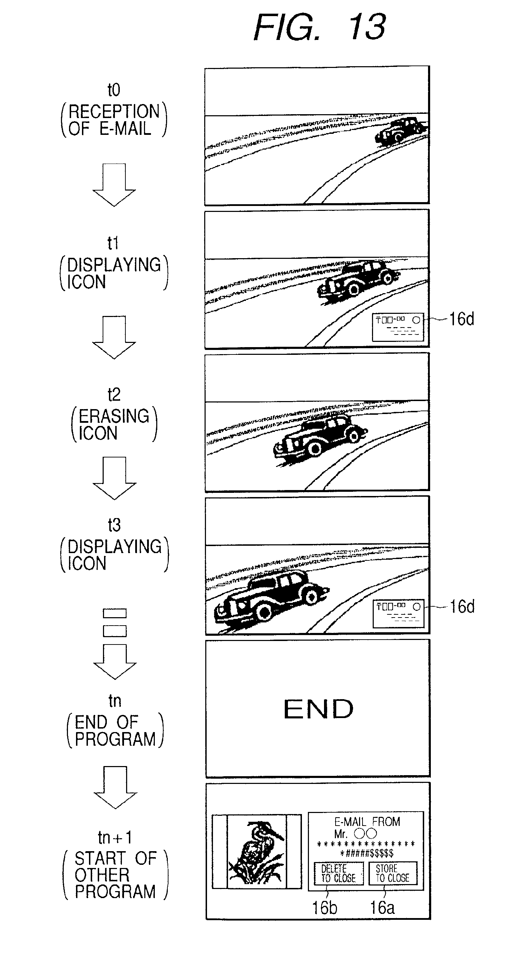

In addition, Fig. 13 shows an example of a picture screen in the case in which an electronic mail is received when a drama program from 15:00 to 16:00 is viewed at 15:55 on Monday and the next program is an animation.

Since 90% of the drama program has been viewed, the type priority "10" is obtained from the table 301 of Fig. 3. Since information requested to be displayed is an electronic mail, the source priority "5" is obtained from the table 401 of Fig. 4. In addition, since it is 15:50 on Monday, the time-depending viewed video image priority "1" is obtained from the table 501 of Fig. 5.

Since priority difference = (type priority + time-depending viewed video image priority) - video image source priority, priority difference = (10 + 1) - 5 = 6.

Since the priority difference is 6, "displaying icon" of the priority level 2 is selected from the table 601 of Fig. 6.

Thus, an icon 16d indicating that the electronic mail has been received is displayed at t1. The icon 16d is deleted at t2. From t3 onward, display and non-display of the icon 16d are alternately performed at an interval of a predetermined time to notify the user that the electronic mail has been received. When the program ends at tn and an animation program starts, it becomes such that priority difference = (3 + 1) - 5 = -1.

Since the priority difference is -1, "switching over to multiwindow" of the priority level 3 is selected from the table 601 of Fig. 6. Since display sizes of respective picture screens are 40% for the main picture screen and 60% for the sub picture screen according to the table 801 of Fig. 8, picture screens of the respective sizes are displayed as shown at tn + 1.

In this embodiment, after a menu picture screen is displayed by the menu key 82 of the remote controller 23, the user can use this menu picture screen to freely set values of the priorities and the priority levels of each table shown in Figs. 3 to 6.

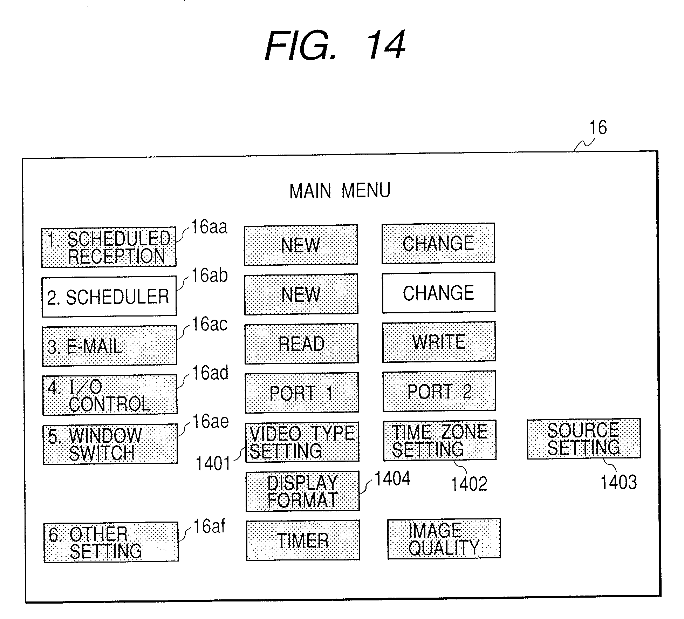

Fig. 14 is a main menu that is displayed on the display device 16 when the menu key 82 is operated. A "1. Scheduled reception" 16aa is a menu to be selected when the user wishes to perform scheduled viewing, in which the user can select "new" setting or "change" of booking by the direction key 84 or 86 and the selection key 87 of the remote controller 23.

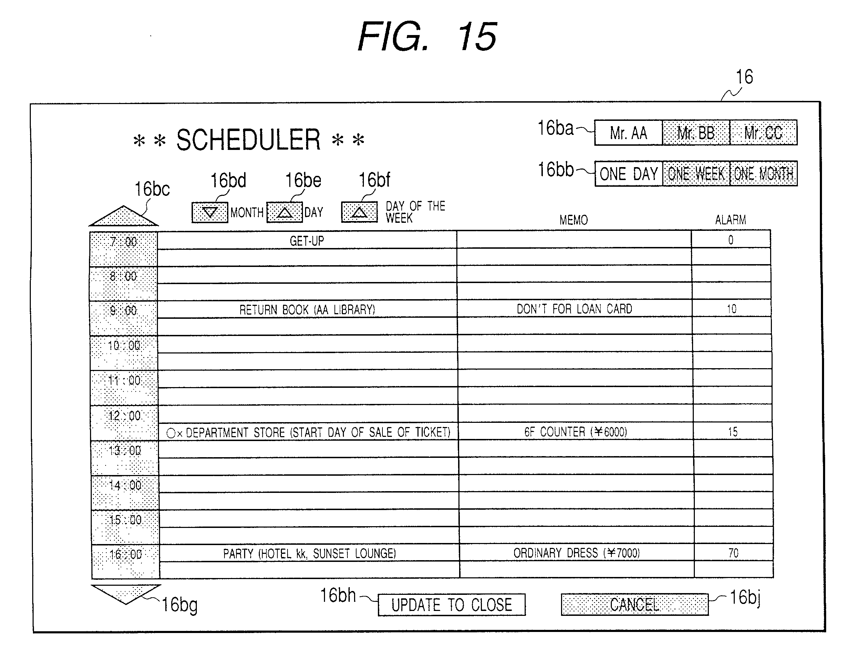

A "2. Scheduler" 16ab in Fig. 14 is a menu to be selected when the user wishes to perform scheduler management, in which the user can select "new" setting or "change" of booking by the direction key 84 or 86 of the remote controller 23. Here, if "change" is selected, a scheduler picture screen of Fig. 15 is displayed. The user operates the remote controller 23 to determine a name selection button 16ba, thereby selecting and displaying a name of a person that the user wishes to display.

In the example of Fig. 15, a schedule of a day of Mr. AA is shown and notification contents, an alarm time and the like can be set for each time of the day. Setting may be done by means of an operation input unit 126 such as a keyboard and a mouse or may be selected from example sentences by the remote controller 23.

A day of the week button 16bf indicates a day of the week. When the selection key 87 of the remote controller 23 is pressed, "holiday" and "special" shown in the table 501 of Fig. 5 can be selected. For example, if "special" is selected even if it is Monday, "special Monday" is set and a level of "special" is assigned to the time-depending viewed video image priority.

When correction is completed, a cursor is moved to an update button 16bh using the direction keys 83, 85, 86 and 84 and the selection key 87 is pressed, whereby the schedule is updated.

A "3. E-mail button" 16ac in Fig. 14 is a button for performing transmission/reception of an electronic mail. A "4. I/O control button" 16ad is a button for setting an apparatus to be connected to an I/O port.

A "5. Window switch button" 16ae of Fig. 14 is a button for setting switching conditions of a multiwindow, with which the user can select setting of a video image type, setting of a time zone, setting of a video image source and setting of a display format by moving each button of the remote controller 23 using the direction keys 83, 85, 86 and 84 to press the selection key 87.

For example, if video type setting 1401 is selected, the table 301 shown in Fig. 3 is read out from the system control unit 102, namely from the RAM 24, and displayed on the display device 16. The user can reset a priority for each type according to the user's preference.

In addition, when time zone setting 1402 is selected, the table 501 shown in Fig. 5 is read out from the RAM 24 and displayed. The user can reset a priority of a video image being viewed now for each viewing time zone according to the user's preference.

When video image source setting 1403 is selected, the table 401 shown in Fig. 4 is read out from the RAM 24 and displayed. The user can reset a priority for each video image source newly requested to be displayed, according to the user's preference.

When display format setting 1404 is selected, the table 601 shown in Fig. 6 is read out from the RAM 24 and displayed. The user can reset a display format corresponding to a priority difference according to the user's preference.

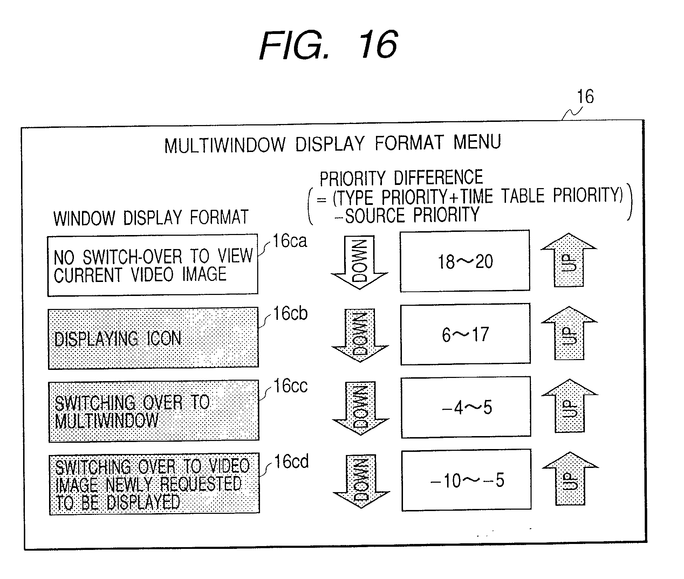

Fig. 16 shows a screen for changing the settings. Highlighted portions are selected, which move upward and downward by the direction keys 83 and 84 of the remote controller 23. A numerical value of a priority difference increases by the direction key 84 and decreases by the direction key 86.

As described above, since switching of a display picture screen in response to a new display request of a video image is controlled using a priority of a video image type and a priority and a time-depending viewed video image priority of a video image source in this embodiment, a display picture screen which is comfortable for a user can be provided even if a display by interruption request occurs.

Further, if a priority difference between a priority of a video image being viewed now and a priority of information newly requested to be displayed is too large to immediately display them on a multiwindow, display may be switched to a multiwindow regardless of the priority difference as soon as the program being viewed now ends.

In addition, even if a video image with a low priority set in advance is being viewed, a forced priority level 1 SW for temporarily increasing a priority of a video image being viewed now may be disposed in a remote controller, an operation unit or the like to give a top priority to the video image being viewed now.

The embodiment discussed above describes the processing in the case in which a new display request is received when a video image based on a single video image source is currently displayed on a picture screen. However, the same processing is performed even if different new display requests are generated while video images based on a plurality of video image sources are displayed on a multiwindow. This case will be hereinafter described as a second embodiment of the present invention.

For example, if a display request from a scheduler is generated while an A channel and a B channel are viewed in a two picture screen mode, priority differences between video images of the A and B channels being displayed and information newly requested to be displayed are obtained individually.

If the obtained two priority levels are different and the lower priority level is 4, the corresponding image being viewed is deleted and the video image requested by the scheduler to be displayed is displayed.

If the lower priority level is 3, the size of the corresponding video image being viewed is reduced and the video image requested by the scheduler to be displayed is also displayed.

If the lower priority level is 2, an icon indicating that there is a display request from the scheduler is displayed.

In addition, if the obtained two priority levels are identical and if both the priority levels are 4, both the video images being viewed are deleted and the video image requested by the scheduler to be displayed is displayed.

If both the priority levels are 3, the sizes of both the video images being viewed are reduced and the video image requested by the scheduler to be displayed is also displayed.

If both the priority levels are 2, an icon indicating that there is a display request from the scheduler is displayed.

If both the priority levels are 1, the display request from the scheduler is remained pending until the priority level of the video image of either program being viewed decreases to 2 or less.

The embodiments discussed above describe the processing in the case in which an electronic mail, an event notice from a scheduler, a scheduled reception or a display request from a communication line is received during viewing of a video image being broadcast. However, EPG information including a type and a recording time of a video image is recorded together with the video image when a program is recorded in the HDD 25, whereby a priority of a video image type and a priority and a time-depending viewed video image priority of a video image source can be obtained using EPG information on a video image signal being reproduced to perform control of a display picture screen in response to a display request of a new video image even while the recorded program is being viewed.

In addition, a recording medium is not limited to an HDD. The same control as described above can be attained even with a DVD, a laser disk or the like as long as the recording medium is a medium in which a type and a recording time of a video image source are recorded.

Further, the control of a window by the system control circuit 10 is realized by software processing using a CPU in the embodiments discussed above. In this case, a program code itself of the software realizes the functions of the above-mentioned embodiments, and the program code itself and means for supplying the program code to a computer, for example, storage medium storing such a program code constitute the present invention. As storage medium for storing such a program code, for example, a floppy disk, a hard disk, an optical disk, a magnetooptical disk, a CD-ROM, a magnetic tape, a nonvolatile memory card, an ROM and the like can be used.

In addition, in the case in which the functions described in the above-mentioned embodiments are realized not only by a computer executing a supplied program code but also by the program code cooperating with an OS (operating system) running on the computer, other application software or the like, such the program code is included in the embodiments of the present invention.

Moreover, in the case in which a supplied program code is stored in a memory provided in a function extended board of a computer or a function extended unit connected to the computer and, then, a CPU or the like provided in the function extended board or the function extended unit executes a part or all of actual processing based on an instruction of the program code, whereby the functions of the above-mentioned embodiments are realized, such the program code is included in the embodiments of the present invention.

As described above, according to the present invention, switching control of a display picture screen is performed in accordance with program information in a television signal to be received, whereby it becomes possible to provide a display picture screen that is more comfortable for a user.

Thus, it is seen that a display control apparatus and method, a receiving apparatus and a recording medium are provided. One skilled in the art will appreciate that the present invention can be practiced by other than the preferred embodiment which is presented for the purposes of illustration and not of limitation, and the present invention can be modified in any way within the technical thoughts of the present invention.

**Claims**

1. A display control apparatus comprising:

   inputting means for inputting a television broadcast signal including a plurality of broadcast programs received by reception means; and display controlling means for controlling a video image corresponding to the television broadcast signal so as to be displayed on a display unit and controlling a display operation of the display unit in response to a new display request of information during the display of the video image,

   wherein said display controlling means determines a priority (level) between the broadcast program and the new display information based on attribute information of a broadcast program being displayed on said display unit, and controls a display operation of said display unit based on the priority.

2. An apparatus according to claim 1, wherein said display controlling means selects one of a plurality of predetermined display states based on the priority and controls a display operation of said display unit in accordance with the selected one display state.

3. An apparatus according to claim 2, wherein the plurality of predetermined display states include a first display state for prohibiting display of a video image associated with the new display information at least until broadcast of a program being displayed on said display unit ends.

4. An apparatus according to claim 2, wherein the plurality of predetermined display states include a second display state for multiplexing a video image being displayed on said display unit and an icon corresponding to the new display information for display thereof.

5. An apparatus according to claim 2, wherein the plurality of predetermined display states include a third display state for displaying the video image of the broadcast program being displayed on said display unit and the video image associated with the new display information in windows which are separate from each other, on a same picture screen.

6. An apparatus according to claim 5, wherein said display controlling means sets sizes of the windows in the third display state in accordance with the priority.

7. An apparatus according to claim 5, wherein said display controlling means controls a display operation of said display unit to delete the window of the new display information in response to a deletion instruction of the window of the new display information in the third display state and to display a video image related to the broadcast program in a predetermined size.

8. An apparatus according to claim 1, wherein said display controlling means further controls a display operation of said display unit based on attribute information of the new display information.

9. An apparatus according to claim 8, wherein said display controlling means determines the priority (level) based on a difference between a priority (value) corresponding to the attribute information of the broadcast program and a priority (value) corresponding to the attribute information of the new display information.

10. An apparatus according to claim 9, wherein said display controlling means compares the priority (level) with a predetermined threshold value to control a display operation of said display unit based on a result of the comparison.

11. An apparatus according to claim 10, further comprising:

changing means for changing the threshold value to an arbitrary value.

12. An apparatus according to claim 9, wherein the priority (value) is a value weighted according to the attribute information.

13. An apparatus according to claim 9, further comprising:

setting means for setting the priority (value) at an arbitrary value.

14. An apparatus according to claim 8, wherein the attribute information of the new display information includes a source of the new display information.

15. An apparatus according to claim 1, further comprising:

program information extracting means for extracting program information associated with the broadcast program from a television broadcast signal inputted by said inputting means,

wherein the attribute information of the broadcast program includes program information obtained by said program extracting means.

16. An apparatus according to claim 1, wherein said display controlling means further determines the priority (level) based on a current date and time.

17. An apparatus according to claim 1, wherein the new display request of information is outputted from at least one of a scheduled reception program, a schedule management program, an electronic mail program and a communication line management program.

18. A receiving apparatus comprising:

inputting means for inputting a video image signal corresponding to a television broadcast signal and program information associated with a program of the video image signal;
a display unit; and
display controlling means for controlling a display operation of said display unit in response to a new display request of information provided during display of a video image corresponding to the video image signal by said display unit,

wherein said display controlling means determines a priority of a program being displayed on said display unit and a priority of the new display information based on the program information and controls a display operation of said display unit based on the priority.

19. A display control method comprising:

an inputting step of inputting a television broadcast signal including a plurality of broadcast programs received by reception means; and
a display controlling step of controlling a video image corresponding to the television broadcast signal to be displayed on a display unit and controlling a display operation of said display unit in response to a new display request of information during display of the video image,

wherein said display controlling step includes a step of determining a priority (level) between the broadcast program and the new display information based on attribute information of a broadcast program being displayed in the display unit, and controlling a display operation of said display unit based on the priority.

20. A method according to claim 19, wherein:

said display controlling step includes a step of selecting one of a plurality of predetermined display states based on the priority and controlling a display operation of said display unit in accordance with the selected one display state.

21. A method according to claim 20, wherein the plurality of predetermined display states include a first display state for prohibiting display of a video image associated with the new display information at least until broadcast of a program being displayed on said display unit ends.

22. A method according to claim 20, wherein the plurality of predetermined display states include a second display state for multiplexing a video image being displayed on said display unit and an icon corresponding to the new display information for display thereof.

23. A method according to claim 20, wherein the plurality of predetermined display states include a third display state for displaying a video image of the broadcast program being displayed on said display unit and a video image related to the new display information in windows which are separate from each other, on a same picture screen.

24. A method according to claim 23, wherein

said display controlling step includes a step of setting sizes of the windows in the third display states in accordance with the priority.

25. A method according to claim 23, wherein said display controlling step includes a step of controlling a display operation of said display unit to delete the window of the new display information in response to a deletion instruction of the window of the new display information in the third display state and to display a video image in accordance with the broadcast program in a predetermined size.

26. A method according to claim 19, wherein said display controlling step includes a step of further controlling a display operation of said display unit based on attribute information of the new display information.

27. A method according to claim 26, wherein said display controlling step determines the priority (level) based on a difference between a priority (value) corresponding to the attribute information of the broadcast program and a priority (value) corresponding to the attribute information of the new display information.

28. A method according to claim 27, wherein said display controlling step includes a step of comparing the priority (level) with a predetermined threshold value to control a display operation of said display unit based on a result of the comparison.

29. A method according to claim 28, further comprising a changing step of changing the threshold value to an arbitrary value.

30. A method according to claim 27, wherein the priority (value) is a value weighted according to the attribute information.

31. A method according to claim 27, further comprising a setting step of setting the priority (value) at an arbitrary value.

32. A method according to claim 26, wherein the attribute information of the new display information includes a source of the new display information.

33. A method according to claim 19, further comprising:

a program information extracting step of extracting program information associated with the broadcast program from a television broadcast signal inputted in said inputting step,

wherein the attribute information of the broadcast program includes program information obtained in said program extracting step.

34. A method according to claim 19, wherein said display controlling step further determines the priority (level) based on a current date and time.

35. A method according to claim 19, wherein the new display request of information is outputted from at least one of a scheduled reception program, a schedule management program, an electronic mail program and a communication line management program.

36. A storage medium storing a program for realizing a display controlling method by using a computer, said display controlling method comprising:

an inputting step of inputting a television broadcast signal including a plurality of broadcast programs received by reception means; and a display controlling step of controlling a video image corresponding to the television broadcast signal to be displayed on a display unit and controlling a display operation of said display unit in response to a new display request of information during display of the video image,

wherein said display controlling step includes a step of determining a priority (level) between the broadcast program and the new display information based on attribute information of a broadcast program being displayed in the display unit, and controlling a display operation of said display unit based on the priority.

37. A method of processing broadcast data for presentation to a user, the method comprising receiving a plurality of broadcast data streams, decoding metadata associated with at least one data stream to determine attributes of content communicated by the data stream, and generating an output for presentation to a user in which the data streams are multiplexed, wherein the multiplexing step gives different priority to presenting different data streams according to a predetermined rule for determining priority based on the metadata.

# FIG. 1

| FIG. 1A | FIG. 1B |
|---------|---------|

# FIG. 1A

A

**DTV RECEPTION UNIT CONFORMING WITH ISDB** 1

TUNER UNIT 2

DEMODU-LATION UNIT 3

DEMULTI-PLEXER UNIT 4

5 AUDIO DECODING UNIT

6 IMAGE DECODING UNIT

7 DATA DECODING UNIT

AUDIO SELECTION UNIT → TO SPEAKER

TO FIG. 1B

PC 200

L2

300 DVD

L3

S4

N

NETWORK

MODEM CONTROL UNIT 20

23

REMOTE CONTROLLER CONTROL UNIT 19

SYSTEM CONTROL UNIT 10

INPUT I/F 25

HDD 25  RTC 26  ROM 17  RAM 24

OPERATION INPUT UNIT 26

# FIG. 1B

# FIG. 2

MULTIWINDOW CONTROL START — S10

① 

OBTAINING PRIORITY OF PROGRAM BEING VIEWED NOW FROM TYPE AND ELAPSED TIME TABLE OF VIDEO IMAGE BEING VIEWED NOW — S11

OBTAINING PRIORITY FROM SOURCE TABLE OF VIDEO IMAGE NEWLY REQUESTED TO BE DISPLAYED — S12

OBTAINING PRIORITY INFORMATION FROM DATE AND TIME ZONE TABLE — S13

COMPARISON OF PRIORITY PRIORITY IS ONE ? — S14    YES →

SEARCHING TIME IN WHICH PRIORITY CHANGES FROM 1 TO OTHER TO SET COUNTER — S15

NO

PRIORITY IS TWO ? — S16    YES →

NO

PRIORITY IS THREE ? — S18    YES →

NO

BLINKING ICON TO NOTIFY THAT THERE IS VIDEO IMAGE REQUESTED TO BE DISPLAYED — S17

PERFORMING MULTIWINDOW DISPLAY WITH WINDOW RATIO CORRESPONDING TO PRIORITY — S19

STORING CHANNEL OF VIDEO IMAGE BEING VIEWED NOW — S20

SWITCH OVER DISPLAY TO NEW VIDEO IMAGE — S21

RETURN — S22

15

## FIG. 3

TYPE PRIORITY (VIDEO IMAGE TYPE AND VIEWING ELAPSED TIME)                301

| TYPE | PRIORITY | | | | | | | | | |
|---|---|---|---|---|---|---|---|---|---|---|
| | 0—10 | —20 | —30 | —40 | —50 | —60 | —70 | —80 | —90 | —100% (ELAPSED TIME) |
| FILM | 2 | 2 | 2 | 2 | 5 | 5 | 5 | 10 | 10 | 10 |
| SPORTS | 5 | 5 | 5 | 5 | 5 | 5 | 5 | 5 | 5 | 5 |
| TRAVEL | 4 | 4 | 4 | 4 | 4 | 4 | 4 | 4 | 4 | 4 |
| NEWS | 2 | 2 | 2 | 2 | 2 | 2 | 2 | 2 | 2 | 2 |
| VARIETY | 1 | 1 | 1 | 1 | 1 | 1 | 1 | 1 | 1 | 1 |
| DRAMA | 2 | 2 | 2 | 2 | 5 | 5 | 5 | 10 | 10 | 10 |
| WEATHER FORECAST | 2 | 2 | 2 | 2 | 2 | 2 | 2 | 2 | 2 | 2 |
| DOCUMENTARY | 5 | 5 | 5 | 5 | 5 | 5 | 5 | 5 | 5 | 5 |
| COOKING | 2 | 2 | 5 | 2 | 2 | 2 | 2 | 2 | 2 | 2 |
| ANIMATION | 3 | 3 | 3 | 3 | 3 | 3 | 3 | 3 | 3 | 3 |
| OTHERS | 1 | 1 | 1 | 1 | 1 | 1 | 1 | 1 | 1 | 1 |

## FIG. 4

SOURCE PRIORITY

| SOURCE | PRIORITY |
|---|---|
| SCHEDULER | 10 |
| BOOKED-UP VIEWING | 10 |
| E-MAIL | 5 |
| COMMUNICATION LINE | 5 |
| | |

401

EP 1 248 459 A2

EP 1 248 459 A2

# FIG. 5

TIME-DEPENDING VIEWED VIDEO IMAGE PRIORITY  501

| DAY OF THE WEEK | PRIORITY OF VIDEO IMAGE BEING VIEWED NOW (ACCORDING TO DAY OF THE WEEK AND TIME ZONE) | | | | | | | | | | | | | | | | | | | | 5— O'CLOCK |
|---|---|---|---|---|---|---|---|---|---|---|---|---|---|---|---|---|---|---|---|---|---|
| | 6— | 7— | 8— | 9— | 10— | 11— | 12— | 13— | 14— | 15— | 16— | 17— | 18— | 19— | 20— | 21— | 22— | 23— | 24— | | |
| MON. | 10 | 10 | 10 | 1 | 1 | 1 | 1 | 1 | 1 | 1 | 1 | 1 | 1 | 8 | 8 | 8 | 8 | 3 | 1 | | 1 |
| TUES. | 10 | 10 | 10 | 1 | 1 | 1 | 1 | 1 | 1 | 1 | 1 | 1 | 1 | 8 | 8 | 8 | 8 | 3 | 1 | | 1 |
| WED. | 10 | 10 | 10 | 1 | 1 | 1 | 1 | 1 | 1 | 1 | 1 | 1 | 1 | 8 | 8 | 8 | 8 | 3 | 1 | | 1 |
| THUR. | 10 | 10 | 10 | 1 | 1 | 1 | 1 | 1 | 1 | 1 | 1 | 1 | 1 | 8 | 8 | 8 | 8 | 3 | 1 | | 1 |
| FRI. | 10 | 10 | 10 | 1 | 1 | 1 | 1 | 1 | 1 | 1 | 1 | 1 | 1 | 8 | 8 | 8 | 8 | 3 | 1 | | 1 |
| SAT. | 3 | 3 | 3 | 5 | 5 | 5 | 5 | 5 | 5 | 5 | 5 | 5 | 5 | 10 | 10 | 10 | 10 | 3 | 3 | | 3 |
| SUN. | 3 | 3 | 3 | 5 | 5 | 5 | 5 | 5 | 5 | 5 | 5 | 5 | 5 | 7 | 7 | 7 | 7 | 3 | 3 | | 3 |
| HOLIDAY | 10 | 10 | 10 | 10 | 10 | 10 | 10 | 10 | 10 | 10 | 10 | 10 | 10 | 10 | 10 | 10 | 10 | 10 | 10 | | 10 |
| SPECIAL | 0 | 0 | 0 | 0 | 0 | 0 | 0 | 0 | 0 | 0 | 0 | 0 | 0 | 0 | 0 | 0 | 0 | 0 | 0 | | 0 |

# FIG. 6

DISPLAY METHOD TABLE

601

| LEVEL | MULTIWINDOW DISPLAY | PRIORITY DIFFERENCE $\left(\begin{array}{l}=(\text{TYPE PRIORITY}+\text{TIME TABLE PRIORITY}) \\ -\text{SOURCE PRIORITY}\end{array}\right)$ |
|---|---|---|
| 1 | NO SWITCH-OVER TO KEEP VIEWING CURRENT VIDEO IMAGE | 15~20 |
| 2 | DISPLAYING ICON | 6~14 |
| 3 | SWITCHING OVER TO MULTIWINDOW | -4~5 |
| 4 | SWITCHING OVER TO VIDEO IMAGE NEWLY REQUESTED TO BE DISPLAYED | -10~-5 |

EP 1 248 459 A2

# FIG. 7

```
                                              ⌐S30
┌─────────────────────────────┐
│   DEPRESSING  CHANNEL  SW    │
└─────────────────────────────┘
              │
              │
              ▼
           ╱──────────╲        ⌐S31
         ╱              ╲
       ╱    DIFFERENT    ╲         YES
      ╲   FROM CURRENT    ╱───────────────────┐
       ╲    CHANNEL ?    ╱                     │
         ╲              ╱                      │
           ╲──────────╱                        │
              │  NO                            ▼            ⌐S32
              │                    ┌─────────────────────────┐
              ▼                    │    CLEARING  COUNTER     │
┌────────────────────┐  ⌐S33       └─────────────────────────┘
│      RETURN         │                        │
└────────────────────┘                         ▼
                                              ( 1 )
```

# FIG. 8

DISPLAY SIZE TABLE

| PRIORITY DIFFERENCE<br>$\Big($ = (TYPE PRIORITY + TIME TABLE PRIORITY)<br>– SOURCE PRIORITY $\Big)$ | MAIN PICTURE<br>SCREEN SIZE | SUB PICTURE<br>SCREEN SIZE |
|---|---|---|
| 5 | 80% | 20% |
| 4 | 80% | 20% |
| 3 | 75% | 25% |
| 2 | 60% | 40% |
| 1 | 50% | 50% |
| 0 | 50% | 50% |
| −1 | 40% | 60% |
| −2 | 25% | 75% |
| −3 | 20% | 80% |
| −4 | 20% | 80% |

EP 1 248 459 A2

# FIG. 9

t0
(RECEPTION OF E-MAIL)

tn
(END OF PROGRAM)

END

tn+1
(START OF OTHER PROGRAM)

Sports News

E-MAIL FROM
Mr. ○○
* * * * * *
DELETE TO CLOSE | STORE TO CLOSE

16b  16a

# FIG. 10

S40

END OF MULTIWINDOW
START

S41

TWO
PICTURE SCREENS
ARE BEING DISPLAYED
?

YES

NO

S42

CLOSING WINDOW
REQUESTED TO BE ENDED

S43

DISPLAYING CHANNEL
VIEWED BEFORE NEWLY-
REQUESTED SWITCH-OVER
OF PICTURE SCREEN

S44

RETURN

# FIG. 11

# FIG. 12

t0
(NOTIFICATION REQUEST
FROM SCHEDULER DURING
VIEWING PROGRAM)

t1
(MULTIWINDOW DISPLAY)

Mr. AA
16 : 00 PARTY
HOTEL kk
SUNSET LOUNGE

CLOSE — 16a

# FIG. 13

t0
(RECEPTION)
(OF E-MAIL)

⬇

t1
(DISPLAYING)
(ICON)

⬇

t2
(ERASING)
(ICON)

⬇

t3
(DISPLAYING)
(ICON)

⬇

tn
(END OF)
(PROGRAM)

⬇

tn+1
(START OF)
(OTHER)
(PROGRAM)

16d

16d

END

E-MAIL FROM
Mr. ○○
* * * * * * * * * * * * * *
*#####$$$$$

DELETE
TO CLOSE

STORE
TO CLOSE

16b          16a

# FIG. 14

16

MAIN MENU

| 1. SCHEDULED RECEPTION 16aa | NEW | CHANGE |
| 2. SCHEDULER 16ab | NEW | CHANGE |
| 3. E-MAIL 16ac | READ | WRITE |
| 4. I/O CONTROL 16ad | PORT 1 | PORT 2 |
| 5. WINDOW SWITCH 16ae | VIDEO TYPE SETTING 1401 | TIME ZONE SETTING | SOURCE SETTING |
| | DISPLAY FORMAT 1404 | 1402 | 1403 |
| 6. OTHER SETTING 16af | TIMER | IMAGE QUALITY |

## FIG. 15

16

**\* \* SCHEDULER \* \***

16ba — | Mr. AA | Mr. BB | Mr. CC |

16bb — | ONE DAY | ONE WEEK | ONE MONTH |

16bc    16bd ▽ MONTH    16be △ DAY    16bf △ DAY OF THE WEEK

| | | MEMO | ALARM |
|---|---|---|---|
| 7:00 | GET-UP | | 0 |
| 8:00 | | | |
| 9:00 | RETURN BOOK (AA LIBRARY) | DON'T FOR LOAN CARD | 10 |
| 10:00 | | | |
| 11:00 | | | |
| 12:00 | ○× DEPARTMENT STORE (START DAY OF SALE OF TICKET) | 6F COUNTER (¥6000) | 15 |
| 13:00 | | | |
| 14:00 | | | |
| 15:00 | | | |
| 16:00 | PARTY (HOTEL kk, SUNSET LOUNGE) | ORDINARY DRESS (¥7000) | 70 |

▽ — 16bg

16bh — | UPDATE TO CLOSE |    | CANCEL | — 16bj

EP 1 248 459 A2

# FIG. 16

16

## MULTIWINDOW DISPLAY FORMAT MENU

WINDOW DISPLAY FORMAT

PRIORITY DIFFERENCE
$$\left( \begin{array}{l} = \text{(TYPE PRIORITY + TIME TABLE PRIORITY)} \\ -\text{SOURCE PRIORITY} \end{array} \right)$$

| WINDOW DISPLAY FORMAT | | PRIORITY DIFFERENCE | |
|---|---|---|---|
| NO SWITCH-OVER TO VIEW CURRENT VIDEO IMAGE 16ca | DOWN | 18~20 | UP |
| DISPLAYING ICON 16cb | DOWN | 6~17 | UP |
| SWITCHING OVER TO MULTIWINDOW 16cc | DOWN | −4~5 | UP |
| SWITCHING OVER TO VIDEO IMAGE NEWLY REQUESTED TO BE DISPLAYED 16cd | DOWN | −10~−5 | UP |